# EUROPÄISCHE PATENTSCHRIFT

(11) **EP 2 687 301 B1**
(45) Veröffentlichungstag und Bekanntmachung des Hinweises auf die Patenterteilung: **10.09.2014**
(21) Anmeldenummer: 12005212.1
(22) Anmeldetag: 16.07.2012
(51) Int. Cl.: B21D 53/10, B21D 53/20, B21H 1/06, B21K 1/40, F16C 33/58

(54) **Winkelring und Verfahren zu dessen Herstellung**
Angled ring and method for its production
Bague de butée d'angle et son procédé de fabrication

(43) Veröffentlichungstag der Anmeldung: 22.01.2014
(73) Patentinhaber: Fischer & Kaufmann GmbH & Co. KG, 57413 Finnentrop (DE)
(72) Erfinder: Bischopink, Hugo, 57413 Finnentrop (DE); Schröder, Meinolf, 57413 Finnentrop (DE)
(74) Vertreter: Wunderlich, Rainer

(56) Entgegenhaltungen:
- DE-A1- 4 119 860
- DE-A1- 10 020 176
- DE-B3-102006 031 536
- DE-C2- 4 294 681

## Beschreibung

Die Erfindung betrifft ein Verfahren zum Herstellen eines Winkelringes aus einem Blech, wobei der Winkelring einen radialen Scheibenabschnitt und einen axialen Nabenabschnitt aufweist.

Weiter betrifft die Erfindung einen Winkelring, welcher aus einem Blech gefertigt ist und einen radialen Scheibenabschnitt und einen axialen Nabenabschnitt aufweist.

Aus der Patentschrift DE 10 2006 031 536 B3 der Anmelderin ist ein gattungsgemäßer Stand der Technik bekannt. Zur Herstellung einer ringförmigen Lagerscheibe wird ein Außenrand einer Blechronde axial hochgestellt und anschließend in Richtung auf den verbliebenen Bodenbereich rückgestaucht. Hierbei entsteht im Eckbereich zwischen dem Boden und dem hochgestellten Rand eine Falzfuge, welche jedoch für bestimmte Belastungsarten unerwünscht ist. Zudem weist der Scheibenabschnitt die gleiche Wandstärke wie der Nabenabschnitt auf. Die Wandstärke entspricht der Blechdicke.

Weiterhin ist es bekannt, Winkelringe spanabhebend durch Drehen aus scheibenförmigen Rohlingen herzustellen. Bei diesen spanabhebenden Verfahren entsteht jedoch fertigungsbedingt ein relativ hoher Materialabfall. Zudem ist das Drehen aufgrund der notwendigen Spannbewegungen und des Verschleißes an den Drehmeißeln relativ kostenaufwendig.

Bei größeren Stückzahlen ist es bekannt, derartige Winkelringe in einem Schmiedeverfahren oder einem Gussverfahren herzustellen. Aufgrund der notwendigen Aufheizung des Materiales sind diese Verfahren energieaufwändig. Zudem kann beim Erkalten Wärmeverzug auftreten, was eine Nachbearbeitung des Werkstückes notwendig macht.

Der Erfindung liegt die **Aufgabe** zugrunde, einen Winkelring und ein Verfahren zur Herstellung des Winkelringes anzugeben, welcher mit großer Formenvielfalt effizient und formgenau herstellbar ist.

Die Aufgabe wird zum einen durch ein Verfahren mit den Merkmalen des Anspruchs 1 sowie durch einen Winkelring mit den Merkmalen des Anspruchs 11 gelöst. Bevorzugte Ausführungsformen der Erfindung sind in den jeweils abhängigen Ansprüchen angegeben.

Das erfindungsgemäße Verfahren zur Herstellung eines Winkelringes aus einem Blech ist dadurch gekennzeichnet,
- dass das Blech zu einem Napf geformt wird, welcher einen radialen Innenrand, einen radialen Außenrand und eine dazwischen liegende, sich axial erstreckende Umfangswand aufweist, welche mit einem Ziehradius in den Innenrand beziehungsweise den Außenrand übergeht,
- dass der radiale Innenrand oder der radiale Außenrand axial umgelegt und an die axiale Umfangswand angelegt wird, wobei ein freies Ende des umgelegten Randes axial gegenüber der Umfangswand mit einem Überstand vorsteht, und
- dass das freie Ende des umgelegten Randes axial rückgestaucht wird, wobei ein Freiraum an zumindest einem Ziehradius der Umfangswand ausgefüllt wird.

Ein erster Grundgedanke der Erfindung liegt darin, einen Napf aus einem Blechstück tiefzuziehen, so dass eine durch Tiefziehen sich axial erstreckende Umfangswand gebildet ist, welche an ihrem einen Ende in einen radialen Außenrand und an ihrem anderen Ende in einen radialen Innenrand übergeht. Vorzugsweise kann der Napf einen durchgehenden Boden aufweisen, in welchem dann zum Bilden des eigentlichen Innenrandes eine Mittenöffnung eingestanzt wird. Im Querschnitt weist der so hergestellte Ringkörper ein Z-Profil auf.

Zum Bilden des axialen Nabenabschnitts wird ein radialer Rand, also der Innenrand und/oder der Außenrand axial umgelegt und in engen Kontakt an die axiale Umfangswand gebracht. Auf diese Weise entsteht eine Materialverdickung, insbesondere eine Aufdoppelung im axialen Nabenabschnitt gegenüber der ursprünglichen Wandstärke des Bleches.

Gemäß einem weiteren Aspekt der Erfindung ist vorgesehen, dass ein freies Ende des umgelegten Randes axial gegenüber der Umfangswand definiert vorsteht. Der vorstehende Überstand wird anschließend axial rückgestaucht, wobei gestauchtes Material des freien Endes des Randes in den Bereich an einen Ziehradius der Umfangswand verdrängt wird und diesen zumindest teilweise verfüllt. Gleichzeitig kann hierbei eine innige Verbindung zwischen der axialen Umfangswand und dem angelegten Rand entlang der Kontaktfuge erreicht werden. Insgesamt kann so ein kompakter, nahezu massiver Winkelring mit einem radialen Scheibenabschnitt und einem hiervon axial vorstehenden verdickten Nabenabschnitt spanlos hergestellt werden. Insbesondere kann die Herstellung durch Kaltumformen auf einer Presse hergestellt werden. Dies ist effizient, energiesparend und sehr formgenau.

Nach einer bevorzugten Ausführungsform der Erfindung ist vorgesehen, dass beim axialen Rückstauchen eine Fuge zwischen der axialen Umfangswand und dem angelegten Rand fluiddicht verschlossen wird. Hierbei kann der Verschluss der Fuge über die gesamte Fugenlänge oder nur in einem oberen Bereich vorgesehen werden. Ein dichtes Anpressen des angelegten Randes an die axiale Umfangswand führt zu einem hochfesten Nabenabschnitt und verhindert zudem das Eindringen von Schmutz oder Flüssigkeiten in den Fugenbereich.

Dabei ist es nach der Erfindung vorteilhaft, dass in der Fuge Öl eingeschlossen wird. Dieses Öl, welches ein Ziehöl aus dem Umformvorgang oder ein speziell aufgetragenes. Öl, insbesondere ein Antikorrosionsöl, sein kann, vermindert eine Korrosionsgefahr innerhalb der Fuge. Weiter wird hierdurch zusätzlich einem Eindringen von Flüssigkeit in einen möglichen Freiraum aufgrund eines Kapillardruckes in die Fuge vorgebeugt. Zudem wird durch das fluiddichte Verschließen eines Randbereiches der Fuge sichergestellt, dass kein Öl aus dem Inneren der Fuge austritt, so dass der Winkelring problemlos lackiert oder oberflächenbeschichtet werden kann.

Ein besonders zweckmäßige Gestaltung des Winkelringes wird dadurch erreicht, dass das rückgestauchte frei Ende in einer radialen Ebene des Scheibenabschnittes des Winkelringes liegt. Es wird also eine ebene Auflagefläche des Scheibenabschnittes erreicht.

Eine weitere vorteilhafte Ausgestaltung der Erfindung liegt darin, dass beim Rückstauchen Kantenbereiche des Nabenabschnittes eckig ausgebildet werden. Insbesondere können die für das Tiefziehen notwendigen Ziehradien durch das Rückstauchen umgeformt werden, so dass sich eckige Kantenbereiche ergeben. Hierdurch kann eine besonders kompakte Bauform des Winkelringes erzielt werden. Zudem werden die Kantenbereiche zusätzlich kalt verfestigt, was das Verschleißverhalten verbessert.

Eine weitere bevorzugte Verfahrensvariante besteht darin, dass eine Materialstärke des Nabenabschnittes doppelt so groß wie die Materialstärke des Scheibenabschnittes ausgebildet wird, welche einer Wandstärke des Blechs entspricht. Die Materialstärke des Scheibenabschnittes entspricht also der Ausgangswandstärke des Blechs, während der Nabenabschnitt gegenüber der ursprünglichen Blechstärke verdoppelt wird. Es können so also Winkelringe mit einem etwa zylindrischen massiven Nabenabschnitt gebildet werden, an welchen radial nach außen oder innen eine scheibenförmige Anlagefläche vorsteht. Das Ausgangsblech weist eine gleiche Blechstärke auf und ist insbesondere aus einem Umformstahl gebildet.

Bevorzugt wird der Winkelring rotationssymmetrisch mit einem zylindrischen Nabenabschnitt und einem kreisförmigen Scheibenabschnitt ausgebildet. Es sind jedoch auch eckige und sonstige nicht rotationssymmetrische Formen, etwa Oval- oder Polygonformen, ohne weiteres möglich.

Dabei ist es nach einer weiteren Variante der Erfindung vorgesehen, dass der Außenrand oder der Innenrand zum Bilden des Scheibenabschnittes besäumt, insbesondere durch Stanzen fertig gestellt wird. Ein freier Randbereich des Scheibenabschnittes kann auf diese Weise nahezu beliebig konturiert werden.

Grundsätzlich ist es nach der Erfindung möglich, dass eine nahezu geschlossene, durchgehende Oberfläche an der Oberseite des Scheibenabschnittes gebildet wird, in welcher die Fuge zwischen der axialen Umfangswand und dem angelegten Rand kaum merklich ist. Zur Vermeidung einer Überpressung und von Übermaßen ist es nach der Erfindung bevorzugt, dass die Fuge an einer Oberseite des Scheibenabschnitts in eine ringförmige Nut mündet. Diese Nut kann Maßabweichungen kompensieren.

Weiter ist es nach einer Variante der Erfindung vorteilhaft, dass der Winkelring anschließend oberflächenbehandelt, insbesondere lackiert oder beschichtet wird. Durch eine derartige Beschichtung kann der Fugenbereich zusätzlich versiegelt werde

Weiterhin ist es nach einer bevorzugten Verfahrensform der Erfindung vorgesehen, dass zum Bilden des verdickten Nabenabschnittes der radiale Außenrand oder der radiale Innenrand axial umgelegt wird. Auf diese Weise kann also ein Winkelring gebildet werden, welcher einen axialen Nabenabschnitt aufweist, an welchem der Scheibenabschnitt radial nach innen oder radial nach außen vorsteht.

Die eingangs genannte Aufgabe wird des Weiteren durch einen Winkelring gelöst, welcher dadurch gekennzeichnet ist, dass der Nabenabschnitt durch Tiefzeihen einer axialen Umfangswand und axiales Umlegen eines freien Randes des Blechs an die Umfangswand gebildet und verdickt ist, wobei zwischen der Umfangswand und dem umgelegten Rand eine Fuge gebildet ist. Dieser Winkelring kann insbesondere nach einem der vorbeschriebenen Verfahren und insbesondere nach einem der Verfahrensansprüche hergestellt sein. Es ergeben sich die zuvor beschriebenen Vorteile.

Insbesondere liegt eine bevorzugte Ausführungsform des Winkelringes darin, dass die Fuge fluiddicht verschlossen ist. Hierdurch wird dem Eindringen von korrosiven Partikeln und Flüssigkeiten in die Fuge vorgebeugt.

Eine weitere bevorzugte Ausführungsform des Winkelringes besteht darin, dass sich in der Fuge Öl befindet. Dieses Öl wirkt einem Eintreten von korrosiven Flüssigkeiten zusätzlich entgegen und verhindert durch eine Beschichtung der Oberfläche Korrosionsvorgänge. Das Öl in der Fuge kann insbesondere ein dünner Ölfilm auf der Blechoberfläche innerhalb eines unteren Fugenbereiches sein.

Eine besonders stabile Ausgestaltung des Winkelringes wird in vorteilhafter Weise dadurch erreicht, dass die Fuge in einer ringförmigen Nut an einer Oberseite des Scheibenabschnittes mündet. Die Nut ist insbesondere kreisringförmig ausgebildet.

Die Erfindung wird nachfolgend anhand von bevorzugten Ausführungsbeispielen weiter erläutert, welche stark schematisiert in den beiliegenden Zeichnungen dargestellt sind. In den Zeichnungen zeigen:
- Fig.1:: eine schematische Ablaufskizze bei der Herstellung eines ersten Winketringes nach der Erfindung;
- Fig.2:: eine schematische Ablaufskizze bei der erfindungsgemäßen Herstellung eines zweiten Winkelringes; und
- Fig.3:: eine vergrößerte ausschnittsweise Querschnittsansicht eines erfindungsgemäß hergestellten dritten Winkelringes.

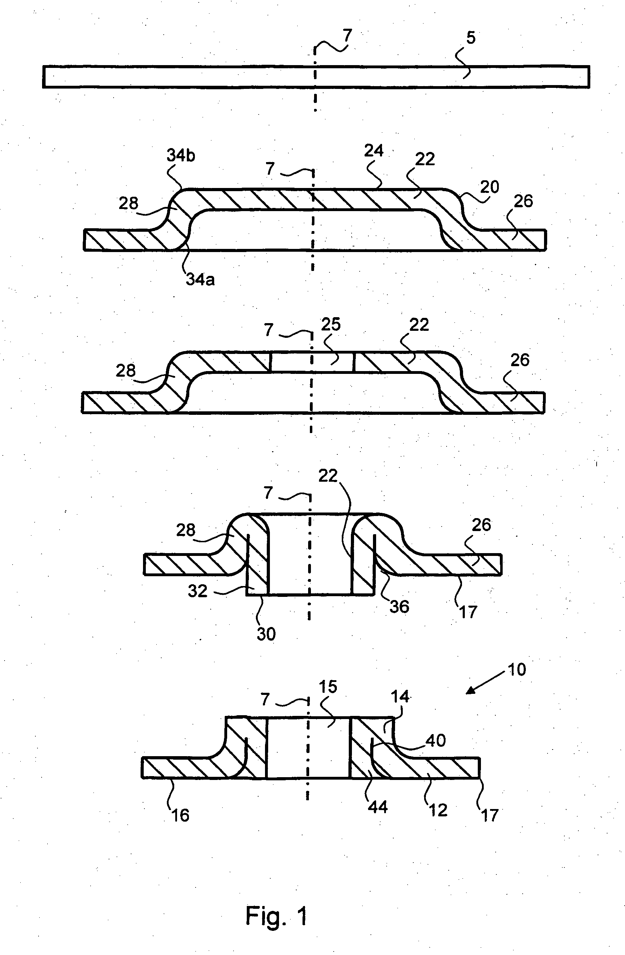

Gemäß einer ersten Verfahrensvariante nach der Erfindung nach Fig. 1 ist als Ausgangswerkstück ein Blech 5 vorgesehen, welches kreisscheibenförmig als Blechronde ausgebildet ist. In einem oder mehreren Tiefziehschritten wird ein Napf 20 gebildet. Der Napf 20 umfasst eine sich koaxial zu einer Mittenachse 7 erstreckende ringförmige Umfangswand 28, welche über einen Ziehradius 34a in einen radial zur Mittenachse 7 nach außen vorstehenden Außenrand 26 übergeht. Am anderen Ende der axialen Umfangswand 28 ist zum Bilden eines radialen Innenrandes 22 ein durchgehender, geschlossener radialer Boden 24 ausgeformt. Die Umfangswand 28 geht mit einem Ziehradius 34b in den radialen Boden 24 über.

Anschließend wird in den Boden 24 eine Mittenöffnung 25 eingestanzt, wobei der zur weiteren Umformung vorgesehene radiale Innenrand 22 verbleibt. Dieser wird in einem weiteren Pressen- oder Tiefziehschritt axial umgelegt und dabei in Kontakt an die axiale Umfangswand 28 angelegt. Dieses axiale Umlegen erfolgt derart, dass der umgelegte Innenrand 22 definiert mit einem Überstand 32 gegenüber dem radialen Außenrand 26 und ihrer unteren Ebene 17 axial vorsteht. Dieses vorstehende freie Ende 30 wird in einem anschließenden Pressenschritt in axialer Richtung auf den Außenrand 26 axial rückgestaucht, wobei ein am Ziehradius 34a bestehender Freiraum 36 durch das gestauchte Material 44 ausgefüllt wird.

Auf diese Weise wird ein rotationssymmetrischer Winkelring 10 mit einem verdickten, hülsenförmigen Nabenabschnitt 14 und einer hiervon radial nach außen vorstehenden, kreisscheibenförmigen Scheibenabschnitt 12 gebildet. Der hülsenförmige Nabenabschnitt 14 umgibt eine zentrische Mittenöffnung 15. Zwischen der Umfangswand 28 und dem axial umgelegten Innenrand 22 ist eine Fuge 40 gebildet, welche durch das angepresste gestauchte Material 44 dicht verschlossen ist.

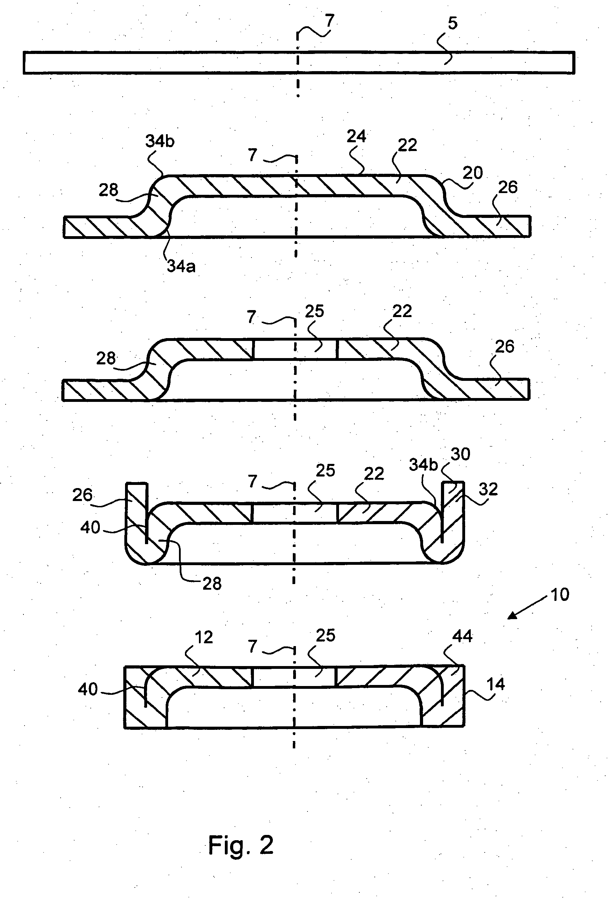

Gemäß Fig. 2 ist eine weitere Verfahrensvariante dargestellt, wobei die drei ersten Verfahrensschritte des Ausstanzens eines Bleches 5, das Tiefziehen eines Napfes 20 und das Ausstanzen eines Mittenbereiches 25 zum Bilden eines radialen Innenrandes 22 dem Verfahren nach Fig. 1 entsprechen.

In Abwandlung des vorausgegangenen Verfahrens wird gemäß Fig. 2 der radial nach außen vorstehende Außenrand 26 axial umgelegt und an die Außenseite der Umfangswand 28 angelegt. Auch hierbei erfolgt das axiale Umlegen auf einer Presse derart, dass ein freier Rand 30 des Außenrandes 26 mit einem Überstand 32 axial gegenüber dem Innenrand 22 vorsteht. Zu einem dichten Verschließen der Kontaktfuge 40 zwischen der axialen Umfangswand 28 und dem axial umgelegten Außenrand 26 wird das freie Ende 30 in Richtung auf den radialen Innenrand 22 gepresst, wobei gestauchtes Material 44 zum Bilden einer ebenen Oberseite 16 in den Bereich des Ziehradius 34b am radialen Innenrand 22 verdrängt wird und den Freiraum 34b ausfüllt.

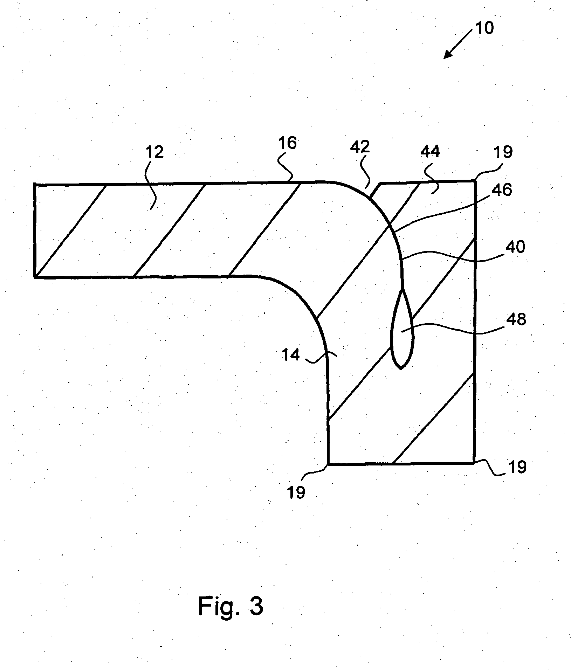

In der schematischen ausschnittsweisen Ansicht von Fig. 3 wird ein Teilbereich eines erfindungsgemäßen Winkelringes 10 im Halbschnitt gezeigt. Der Winkelring 10 umfasst einen sich axial erstreckenden, hülsenförmigen Nabenabschnitt 14 und einen sich hiervon radial nach außen erstreckenden Scheibenabschnitt 12. Dieser Winkelring ist im Wesentlichen nach dem Verfahren gemäß Fig. 1 hergestellt. Es ist zu erkennen, dass zwischen der Umfangswand 28 und dem umgelegten Innenrand 22 eine Fuge 40 ausgebildet ist, entlang welcher sich die Umfangswand 28 und der umgelegte Innenrand 22 im Wesentlichen kontaktieren. Durch das beim Rückstauchen verdrängte, gestauchte Material 44 wird ein Dichtbereich 46 der Fuge 40 gebildet. Im Dichtbereich 46 liegen die beiden freien Oberflächen der Umfangswand 28 und des umgelegten Randes dicht aneinander und sind derart verpresst, dass ein Flüssigkeitseintritt in die Fuge 40 von außen verhindert ist.

In einem vom Dichtbereich 46 abgewandten Aufnahmebereich 48 der Fuge 40 kann ein Spalt im Bereich von einigen Hundertstel oder Zehntel Millimeter verbleiben, welcher zur Aufnahme eines Öles dient. Bei dem Öl kann es sich um das beim Ziehen eingesetzte Ziehöl oder ein speziell vor dem Verschließen aufgebrachtes Korrosionsschutzöl handeln. Durch den Dichtbereich 46 ist sichergestellt, dass eingeschossenes Öl aus dem Aufnahmebereich 48 nicht nach außen treten kann.

Zur Oberseite 16 des Scheibenabschnittes 12 hin mündet die Fuge 40 in eine ringförmige, im Querschnitt V-förmige Nut 42. Bei dem vorliegenden Winkelring 10 wird also keine durchgehende ebene Oberseite 16 gebildet. Die Nut 42 kann so gewisse Maßschwankungen und Materialdickenschwankungen und damit überschüssiges gestauchtes Material 44 kompensieren, so dass Überpressungen vermieden werden. Des Weiteren können beim Rückstauchen neben einem dichten Verschließen der Fuge 40 Kantenbereiche 19 des Nabenabschnittes 14 eckig, das heißt mit einem kleinen Kantenradius oder einer Phase, ausgebildet werden. Hierdurch wird trotz Vorsehen von für das Umformen günstiger Ziehradien eine kompakte Ausgestaltung des Winkelringes 10 mit eckigen Kantenbereichen 19 geschaffen.

Der erfindungsgemäße Winkelring wurde vorausgehend anhand eines rotationssymmetrischen Teiles beschrieben. Es sind jedoch auch andere Formgebungen, insbesondere eine quadratische Kontur oder sonstige polygonale oder unrunde, insbesondere ovale Formen möglich.

## Patentansprüche

1. Verfahren zum Herstellen eines Winkelringes (10) aus einem Blech (5), wobei der Winkelring (10) einen radialen Scheibenabschnitt (12) und einen axialen Nabenabschnitt (14) aufweist,
**dadurch gekennzeichnet,**
- **dass** das Blech (5) zu einem Napf (20) geformt wird, welcher einen radialen Innenrand (22), einen radialen Außenrand (26) und eine dazwischen liegende, sich axial erstreckende Umfangswand (28) aufweist, welche mit einem Ziehradius (34) in den Innenrand (22) beziehungsweise den Außenrand (26) übergeht,
- **dass** zum Bilden eines verdickten Nabenabschnittes (14) der radiale Innenrand (22) oder der radiale Außenrand (26) axial umgelegt und an die axiale Umfangswand (28) angelegt wird, wobei ein freies Ende (30) des umgelegten Randes (22; 26) axial gegenüber der Umfangswand (28) mit einem Überstand (32) vorsteht, und
- **dass** das freie Ende (30) des umgelegten Randes (22; 26) axial rückgestaucht wird, wobei ein Freiraum (36) an zumindest einem Ziehradius (34) der Umfangswand (28) ausgefüllt wird.

2. Verfahren nach Anspruch 1,
**dadurch gekennzeichnet,**
**dass** beim axialen Rückstauchen eine Fuge (40) zwischen der axialen Umfangswand (28) und dem angelegten Rand (22; 26) fluiddicht verschlossen wird.

3. Verfahren nach Anspruch 2,
**dadurch gekennzeichnet,**
**dass** in der Fuge (40) Öl eingeschlossen wird.

4. Verfahren nach einem der Ansprüche 1 bis 3,
**dadurch gekennzeichnet,**
**dass** zum Bilden des radialen Innenrandes (22) der Napf (20) mit einem durchgehenden Boden (24) tiefgezogen wird, dessen Mittenbereich (25) ausgestanzt wird.

5. Verfahren nach einem der Ansprüche 1 bis 4,
**dadurch gekennzeichnet**
**dass** das rückgestauchte freie Ende (30) in einer Ebene (17) des Scheibenabschnittes (12) des Winkelringes liegt.

6. Verfahren nach einem der Ansprüche 1 bis 5,
**dadurch gekennzeichnet,**
**dass** beim Rückstauchen Kantenbereiche (19) des Nabenabschnittes (14) eckig ausgebildet werden.

7. Verfahren nach einem der Ansprüche 1 bis 6,
**dadurch gekennzeichnet,**
**dass** eine Materialstärke des Nabenabschnittes (14) doppelt so groß wie die Materialstärke des Scheibenabschnittes (12) ausgebildet wird, welche einer Wandstärke des Blechs (5) entspricht.

8. Verfahren nach einem der Ansprüche 1 bis 7,
**dadurch gekennzeichnet,**
**dass** der Außenrand (26) oder der Innenrand (22) zum Bilden des Scheibenabschnittes (12) besäumt, insbesondere durch Stanzen, fertig gestellt wird.

9. Verfahren nach einem der Ansprüche 5 bis 8,
**dadurch gekennzeichnet,**
**dass** die Fuge (40) an einer Oberseite (16) des Scheibenabschnittes (12) in eine ringförmige Nut (42) mündet.

10. Verfahren nach einem der Ansprüche 1 bis 9,
**dadurch gekennzeichnet,**
**dass** der Winkelring (10) anschließend oberflächenbehandelt, insbesondere lackiert oder beschichtet wird.

11. Winkelring, welcher aus einem Blech (5) gefertigt ist und einen radialen Scheibenabschnitt (12) und einen axialen Nabenabschnitt (14) aufweist,
**dadurch gekennzeichnet,**
**dass** der Nabenabschnitt (14) durch Tiefziehen eines Napfes (20) mit axialer Umfangswand (28) und axiales Umlegen eines Randes (22; 26) des Napfes (20) an die Umfangswand gebildet und gegenüber dem Scheibenabschnitt (12) verdickt ist, wobei zwischen der Umfangswand (28) und dem umgelegten Rand (22; 26) eine Fuge (40) gebildet ist.

12. Winkelring nach Anspruch 11,
**dadurch gekennzeichnet,**
**dass** die Fuge (40) fluiddicht verschlossen ist.

13. Winkelring nach Anspruch 12,
**dadurch gekennzeichnet,**
**dass** sich in der Fuge (40) Öl befindet.

14. Winkelring nach einem der Ansprüche 11 bis 13,
**dadurch gekennzeichnet**
**dass** die Fuge (40) in einer ringförmigen Nut (42) an einer Oberseite (16) des Scheibenabschnittes (12) mündet.

## Claims

1. Method for producing an angled ring (10) from a sheet metal (5), wherein the angled ring (10) has a radial disk section (12) and an axial hub section (14),
**characterized in that**
- the sheet metal (5) is shaped to a bowl (20) which has a radial inner rim (22), a radial outer rim (26) and an intermediate axially extending circumferential wall (28) which, with a drawing radius (34), merges into the inner rim (22) and the outer rim (26) respectively,
- to form a thickened hub section (14) the radial inner rim (22) or the radial outer rim (26) is folded axially and applied to the axial circumferential wall (28), wherein a free end (30) of the folded rim (22; 26) protrudes axially with a protrusion (32) from the circumferential wall (28), and
- the free end (30) of the folded rim (22; 26) is back-upset axially, wherein a free space (36) located on at least one drawing radius (34) of the circumferential wall (28) is filled out.

2. Method according to claim 1,
**characterized in that**
during axial back-upsetting a joint (40) between the axial circumferential wall (28) and the applied rim (22; 26) is closed in a fluid-tight manner.

3. Method according to claim 2,
**characterized in that**
in the joint (40) oil is enclosed.

4. Method according to any one of claims 1 to 3,
**characterized in that**
to form the radial inner rim (22) the bowl (20) is deep-drawn with a continuous bottom (24), the center area (25) of which is punched out.

5. Method according to any one of claims 1 to 4,
**characterized in that**
the back-upset free end (30) lies in a plane (17) of the disk section (12) of the angled ring.

6. Method according to any one of claims 1 to 5,
**characterized in that**
during back-upsetting, edge areas (29) of the hub section (14) are designed in an angular manner.

7. Method according to any one of claims 1 to 6,
**characterized in that**
a material thickness of the hub section (14) is designed twice as large as the material thickness of the disk section (12) which corresponds to a wall thickness of the sheet metal (5).

8. Method according to any one of claims 1 to 7,
**characterized in that**
to form the disk section (12) the outer rim (26) or the inner rim (22) is trimmed, in particular being finished through punching.

9. Method according to any one of claims 5 to 8,
**characterized in that**
on an upper side (16) of the disk section (12) the joint (40) leads into an annular groove (42).

10. Method according to any one of claims 1 to 9,
**characterized in that**
the angled ring (10) is subsequently surface-treated, in particular painted or coated.

11. Angled ring which is produced from a sheet metal (5) and has a radial disk section (12) and an axial hub section (14),
**characterized in that**
the hub section (14) is formed by deep-drawing a bowl (20) with an axial circumferential wall (28) and by axially folding a rim (22; 26) of the bowl (20) towards the circumferential wall and is thickened with respect to the disk section (12), wherein a joint (40) is formed between the circumferential wall (28) and the folded rim (22; 26).

12. Angled ring according to claim 11,
**characterized in that**
the joint (40) is closed in a fluid-tight manner.

13. Angled ring according to claim 12,
**characterized in that**
in the joint (40) oil is present.

14. Angled ring according to any one of claims 11 to 13,
**characterized in that**
the joint (40) leads into an annular groove (42) on an upper side (16) of the disk section (12).

## Revendications

1. Procédé de fabrication d'une bague de butée d'angle (10) à partir d'une tôle (5), la bague de butée d'angle (10) comprenant une partie en forme de disque (12) radiale et une partie en forme de moyeu (14) axiale,
**caractérisé :**
**en ce que** la tôle (5) a la forme d'une coupelle (20) qui comprend un rebord intérieur radial (22), un rebord extérieur radial (26) et une paroi intermédiaire périphérique (28) s'étendant de manière axiale et qui se raccorde avec un rayon de courbure (34) respectivement au rebord intérieur (22) et au rebord extérieur (26),
**en ce que**, pour la formation d'une partie en forme de moyeu (14) épaissie, le rebord intérieur radial (22) ou le rebord extérieur radial (26) est replié de manière axiale et vient se mettre en place contre la paroi périphérique axiale (28), de telle sorte qu'une extrémité libre (30) du rebord replié (22 ; 26) est en saillie de manière axiale, par rapport à la paroi périphérique (28), avec un surplomb (32), et
**en ce que** l'extrémité libre (30) du rebord replié (22 ; 26) est comprimée axialement vers l'arrière, de sorte qu'un espace libre (36) est comblé contre au moins un rayon de courbure (34) de la paroi périphérique (28).

2. Procédé selon la revendication 1,
**caractérisé :**
**en ce que**, lors de la compression axiale, un joint (40) est ajusté, en étant étanche aux fluides, entre la paroi périphérique axiale (28) et le rebord (22 ; 26) mis en place.

3. Procédé selon la revendication 2,
**caractérisé :**
**en ce que** de l'huile est enfermée dans le joint (40).

4. Procédé selon une des revendications 1 à 3,
**caractérisé :**
**en ce que**, pour la formation du rebord intérieur radial (22), la coupelle (20) est emboutie, en ayant un fond continu (24) dont la partie centrale (25) est percée par découpe.

5. Procédé selon une des revendications 1 à 4,
**caractérisé :**
**en ce que** l'extrémité libre comprimée vers l'arrière (30) est située dans un plan (17) de la partie en forme de disque (12) de la bague de butée d'angle.

6. Procédé selon une des revendications 1 à 5,
**caractérisé :**
**en ce que**, lors de la compression vers l'arrière, on forme des zones de bordure (19) de la partie en forme de moyeu (14) qui sont anguleuses.

7. Procédé selon une des revendications 1 à 6,
**caractérisé :**
**en ce que** l'épaisseur du matériau de la partie en forme de moyeu (14) est formée en étant deux fois plus grande que l'épaisseur du matériau de la partie en forme de disque (12), qui correspond à l'épaisseur de paroi de la tôle (5).

8. Procédé selon une des revendications 1 à 7,
**caractérisé :**
**en ce que**, pour la formation de la partie en forme de disque (12), le rebord extérieur (26) ou le rebord intérieur (22) est préparé en étant rogné, plus particulièrement par poinçonnage.

9. Procédé selon une des revendications 5 à 8,
**caractérisé :**
**en ce que** le joint (40) débouche dans une rainure annulaire (42) sur la face supérieure (16) de la partie en forme de disque (12).

10. Procédé selon une des revendications 1 à 9,
**caractérisé :**
**en ce que** la bague de butée d'angle (10) subit ensuite un traitement de surface, plus particulièrement en étant laquée ou en recevant un revêtement.

11. Bague de butée d'angle, qui est réalisée à partir d'une tôle (5) et comprend une partie en forme de disque (12) radiale et une partie en forme de moyeu (14) axiale,
**caractérisée :**
**en ce que** la partie en forme de moyeu (14) est formée par emboutissage d'une coupelle (20) avec une paroi périphérique (28) axiale et par repliement axial d'un rebord (22 ; 26) de la coupelle (20) contre la paroi périphérique et est épaissie par rapport à la partie en forme de disque (12), de telle sorte qu'un joint (40) est formé entre la paroi périphérique (28) et le rebord replié (22 ; 26).

12. Bague de butée d'angle selon la revendication 11,
**caractérisée :**
**en ce que** le joint (40) est ajusté en étant étanche aux fluides.

13. Bague de butée d'angle selon la revendication 12,
**caractérisée :**
**en ce que** de l'huile est présente dans le joint (40).

14. Bague de butée d'angle selon une des revendications 11 à 13,
**caractérisée :**
**en ce que** le joint (40) débouche sur la face supérieure (16) de la partie en forme de disque (12), dans une rainure annulaire (42).
